(19)

Europäisches
Patentamt
European
Patent Office
Office européen
des brevets

(11) **EP 4 654 712 A1**

(12) **EUROPEAN PATENT APPLICATION**
published in accordance with Art. 153(4) EPC

(43) Date of publication:
**26.11.2025 Bulletin 2025/48**

(21) Application number: **24756003.0**

(22) Date of filing: **01.02.2024**

(51) International Patent Classification (IPC):
**H04W 72/0453** (2023.01)

(52) Cooperative Patent Classification (CPC):
**H04W 72/0453; H04W 72/53; H04W 76/14**

(86) International application number:
**PCT/CN2024/075174**

(87) International publication number:
**WO 2024/169629 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310131416**

(71) Applicant: **CICT Connected and Intelligent
Technologies Co., Ltd.
Chongqing 400041 (CN)**

(72) Inventors:
• **WANG, Yakun
Chongqing 400041 (CN)**
• **ZHAO, Rui
Chongqing 400041 (CN)**
• **WEN, Xiaoran
Chongqing 400041 (CN)**
• **ZHENG, Shilei
Chongqing 400041 (CN)**

(74) Representative: **Zacco GmbH
Bayerstrasse 83
80335 München (DE)**

(54) **RESOURCE SELECTION METHOD AND APPARATUS FOR SIDELINK ON UNLICENSED SPECTRUM, AND TERMINAL**

(57)     The present disclosure provides a method and apparatus for selecting sidelink resources in an unlicensed spectrum, and a terminal. The method applied to a first terminal includes: performing resource selection and determining transmission resources for PSCCH and PSSCH transmissions; and performing PSCCH and PSSCH transmission, where a PSCCH is used to carry first-stage sidelink control information, which at least includes resource indication information, and the resource indication information at least includes subchannel indication information and/or resource block set indication information.

```
┌─────────────────────────────────────────────────────────────┐
│ Perform resource selection to determine transmission         │──── S101
│ resources for PSCCH and PSSCH transmissions                  │
└─────────────────────────────────────────────────────────────┘
                              │
                              ▼
┌─────────────────────────────────────────────────────────────┐
│ Perform PSCCH and PSSCH transmission, where a PSCCH is used  │
│ to carry first-stage sidelink control information, which at  │
│ least includes resource indication information, and the      │──── S102
│ resource indication information includes at least one of     │
│ subchannel indication information and resource block set     │
│ indication information                                       │
└─────────────────────────────────────────────────────────────┘
```

Fig. 1

EP 4 654 712 A1

**Description**

**Cross-Reference to Related Application**

The present disclosure claims priority to Chinese Patent Application No. 202310131416.6, filed on February 17, 2023, the entire content of which is incorporated herein by reference.

**Technical Field**

The present disclosure relates to the technical field of communications, and in particular, to a method and apparatus for selecting sidelink resources in an unlicensed spectrum, and a terminal.

**Background**

A terminal device in an unlicensed spectrum is required to meet the requirements for occupied channel bandwidth (OCB) and power spectral density (PSD). Therefore, a structure of an interlaced resource block (IRB) is introduced in new radio in unlicensed spectrum (NR-U). In a sidelink in unlicensed spectrum (SL-U) mechanism, the IRB structure is similarly supported for both a physical sidelink control channel (PSCCH) and a physical sidelink shared channel (PSSCH).

Further, for PSSCH transmissions in the SL-U, the concept of subchannels from a R16/R17 sidelink is retained. Unlike in the R16/R17 sidelink, where the PSSCH transmissions occupy contiguous subchannels in a frequency domain, the PSSCH transmissions in the SL-U may occupy non-contiguous subchannels in the frequency domain. In particular, in a case where a resource pool includes a plurality of resource block sets (RB sets), the PSSCH transmissions may be performed across the plurality of RB sets. The inventor have found that, from a frequency domain perspective, the subchannels occupied by the PSSCH transmissions may no longer be contiguous and may occupy the subchannels in the plurality of RB sets. In this case, an original resource indication method using a time resource indication value (TRIV) & a frequency resource indication value (FRIV) is no longer applicable to the SL-U, or the indication can only be achieved by using a plurality of FRIVs, leading to increased signaling overhead for resource indication. Therefore, there is a need to define a new method for indicating frequency domain resources.

**Summary**

A technical objective to be achieved by the embodiments of the present disclosure is to provide a method and apparatus for selecting sidelink resources in an unlicensed spectrum, and a terminal, to solve the problems that a resource indication method in the related art is no longer applicable to SL-U, or there is a need to increase the signaling overhead for resource indication.

In order to solve the above technical problems, embodiments of the present disclosure provide a method for selecting sidelink resources in an unlicensed spectrum, applied to a first terminal, including:

performing resource selection and determining transmission resources for PSCCH and PSSCH transmissions; and

performing PSCCH and PSSCH transmission, where a PSCCH is used to carry first-stage sidelink control information (1st-stage SCI), the first-stage sidelink control information at least includes resource indication information, and the resource indication information at least includes subchannel indication information and/or resource block set indication information.

In some embodiments, according to the method for selecting sidelink resources described above, the transmission resources occupy one or more contiguous resource block sets.

In some embodiments, according to the method for selecting sidelink resources described above, the number of resource block sets occupied by the transmission resources corresponding to different PSCCH and PSSCH transmissions belonging to the same transport block (TB) is the same.

In some embodiments, according to the method for selecting sidelink resources described above, in a case where the transmission resources occupy a plurality of contiguous resource block sets, the transmission resources also satisfy at least one of the following:

indexes of subchannels occupied by the transmission resources are contiguous across the different resource block sets;

in the different resource block sets, indexes of subchannels occupied by the transmission resources are contiguous;

in the different resource block sets, the number of subchannels occupied by the transmission resources is the same; and

the number of subchannels occupied by the transmission resources in at least one resource block set is different from the number of subchannels occupied by the transmission resources in other resource block sets.

In some embodiments, according to the method for selecting sidelink resources described above, in a case where the number of subchannels occupied by the transmission resources is the same across the different resource block sets, and indexes of the occupied subchannels are contiguous, the transmission resources also satisfy at least one of the following:

indexes of the subchannels occupied by the transmission resources are the same across the different resource block sets; and

IRB indexes corresponding to the subchannels occupied by the transmission resources are the same across the different resource block sets.

In some embodiments, according to the method for selecting sidelink resources described above, the subchannel indication information includes a first indication field. The first indication field is used to indicate the subchannels occupied by the PSSCH transmission resources and a target transmission resources corresponding to the PSCCH in a first resource block set.
A resource block set index corresponding to the first resource block set serves as a resource block set index reference value for all resource block sets occupied by the PSSCH transmission resources and the target transmission resources. The target transmission resources are transmission resources reserved by the target PSCCH.
In some embodiments, according to the method for selecting sidelink resources described above, the method for selecting sidelink resources further includes:
determining the first indication field according to at least one of the following:
a starting subchannel index of the target transmission resources in the first resource block set, the number of subchannels occupied by the PSSCH transmission resources and the target transmission resources in the first resource block set, and the total number of subchannels in the first resource block set.
In some embodiments, according to the method for selecting sidelink resources described above, the subchannel indication information further includes a second indication field, where the second indication field represents a difference value between an index value of a second target subchannel and an index value of a first target subchannel.
The index value of the first target subchannel serves as a first index reference value for subchannels occupied by the target transmission resources and the PSSCH transmission resources in the first resource block set, the index value of the second target subchannel serves as a second index reference value for subchannels occupied by the target transmission resources and the PSSCH transmission resources in a second resource block set, and the second resource block set is a resource block set other than the first resource block set occupied by the PSSCH transmission resources and the target transmission resources.
In some embodiments, according to the method for selecting sidelink resources described above, the resource block set indication information is used to indicate information about resource block sets occupied by the PSSCH transmission resources and the target transmission resources corresponding to the PSCCH.
In some embodiments, according to the method for selecting sidelink resources described above, the method for selecting sidelink resources further includes:
determining the resource block set indication information according to at least one of the following:
the number of resource block sets occupied by the PSSCH transmission resources and the target transmission resources, an index of a starting resource block set occupied by the target transmission resources, and the total number of resource block sets within a resource pool.
Embodiments of the present disclosure further provide a method for selecting sidelink resources in an unlicensed spectrum, applied to a second terminal, including:

receiving a PSCCH sent by a first terminal; and

determining PSSCH transmission resources and target transmission resources corresponding to the PSCCH according to resources corresponding to the PSCCH and resource indication information, where the target transmission resources are transmission resources reserved by the PSCCH, the resource indication information is included in first-stage sidelink control information, the first-stage sidelink control information is carried on the PSCCH, and the resource indication information at least includes subchannel indication information and/or resource block set indication information.

In some embodiments, according to the method for selecting sidelink resources described above, in a case where the resource indication information includes the subchannel indication information, the subchannel indication information includes: a first indication field, or both a first indication field and a second indication field.

The first indication field is used to determine at least one of the following: the number of subchannels occupied by the PSSCH transmission resources and the target transmission resources in respective first resource block sets, and a starting subchannel occupied by the target transmission resources in the first resource block set;

the second indication field is used to determine a difference value between an index value of a second target subchannel and an index value of a first target subchannel, the index value of the first target subchannel serves as a first index reference value for subchannels occupied by the PSSCH transmission resources and the target transmission resources in the first resource block set, and the index value of the second target subchannel serves as a second index reference value for subchannels occupied by the PSSCH transmission resources and the target transmission resources in a second resource block set;

a resource block set index corresponding to the first resource block set serves as a resource block set index reference value for all resource block sets occupied by the PSSCH transmission resources and the target transmission resources; and

the second resource block set is a resource block set other than the first resource block set occupied by the PSSCH transmission resources and the target transmission resources.

In some embodiments, according to the method for selecting sidelink resources described above, in a case where the resource indication information includes the resource block set indication information, the resource block set indication information is used to determine at least one of the following: the number of resource block sets occupied by the PSSCH transmission resources, the number of resource block sets occupied by the target transmission resources, and an index value of a starting resource block set occupied by the target transmission resources.

In some embodiments, according to the method for selecting sidelink resources described above, the determining PSSCH transmission resources and target transmission resources corresponding to the PSCCH according to resources corresponding to the PSCCH and resource indication information includes at least one of the following:

determining the PSSCH transmission resources according to the resources corresponding to the PSCCH and the resource indication information; and

determining the target transmission resources according to the resource indication information.

In some embodiments, according to the method for selecting sidelink resources described above, the determining the target transmission resources according to the resource indication information includes at least one of the following:

obtaining a starting resource block set occupied by the target transmission resources and the number of resource block sets occupied by the target transmission resources according to resource block set indication information in the resource indication information;

determining, according to a first indication field included in the subchannel indication information, a starting subchannel occupied by the target transmission resources in a first resource block set and the number of subchannels occupied in the first resource block set;

determining subchannels occupied by the target transmission resources in the first resource block set according to the starting subchannel occupied by the target transmission resources in the first resource block set and the number of the subchannels occupied in the first resource block set;

determining subchannels occupied by the target transmission resources in a second resource block set according to the subchannels occupied by the target transmission resources in the first resource block set; alternatively,

determining subchannels occupied by the target transmission resources in the second resource block set according to the subchannels occupied by the target transmission resources in the first resource block set and a second indication field included in the subchannel indication information.

In some embodiments, according to the method for selecting sidelink resources described above, the determining subchannels occupied by the target transmission resources in the second resource block set according to the subchannels occupied by the target transmission resources in the first resource block set includes at least one of the following:

indexes of subchannels occupied in the second resource block set are the same as indexes of subchannels occupied in the first resource block set; and

IRB indexes corresponding to the subchannels occupied in the second resource block set are the same as IRB indexes corresponding to the subchannels occupied in the first resource block set.

In some embodiments, according to the method for selecting sidelink resources described above, the determining subchannels occupied by the target transmission resources in the second resource block set according to the subchannels occupied by the target transmission resources in the first resource block set and the second indication field includes:
index values of the subchannels occupied by the target transmission resources in the second resource block set being sums of index values of the subchannels occupied by the target transmission resources in the first resource block set and a difference value indicated in the second indication field.

In some embodiments, according to the method for selecting sidelink resources described above, the determining the PSSCH transmission resources according to the resources corresponding to the PSCCH and the resource indication information includes at least one of the following:

determining resource block sets occupied by the PSSCH transmission resources according to the resources corresponding to the PSCCH and the resource block set indication information; and

determining subchannels occupied by the PSSCH transmission resources according to the resources corresponding to the PSCCH and the subchannel indication information.

In some embodiments, according to the method for selecting sidelink resources described above, the determining resource block sets occupied by the PSSCH transmission resources according to the resources corresponding to the PSCCH and the resource block set indication information includes:

determining a starting resource block set corresponding to the PSSCH transmission resources according to the resources corresponding to the PSCCH;

determining the number of resource block sets occupied by the PSSCH transmission resources according to the resource block set indication information; and

determining resource block sets occupied by the PSSCH transmission resources according to the starting resource block set corresponding to the PSSCH transmission resources and the number of the resource block sets occupied by the PSSCH transmission resources.

In some embodiments, according to the method for selecting sidelink resources described above, the determining subchannels occupied by the PSSCH transmission resources according to the resources corresponding to the PSCCH and the subchannel indication information includes at least one of the following:

determining a starting subchannel occupied by the PSSCH transmission resources in a first resource block set according to the resources corresponding to the PSCCH;

determining the number of subchannels occupied by the PSSCH transmission resources in the first resource block set according to a first indication field in the subchannel indication information;

determining subchannels occupied by the PSSCH transmission resources in the first resource block set according to the starting subchannel occupied by the PSSCH transmission resources in the first resource block set and the number of the subchannels occupied by the PSSCH transmission resources in the first resource block set;

determining subchannels occupied by the PSSCH transmission resources in a second resource block set according to the subchannels occupied by the PSSCH transmission resources in the first resource block set; alternatively,

determining subchannels occupied by the PSSCH transmission resources in the second resource block set according to the subchannels occupied by the PSSCH transmission resources in the first resource block set and a second indication field included in the subchannel indication information.

In some embodiments, according to the method for selecting sidelink resources described above, the determining subchannels occupied by the PSSCH transmission resources in the second resource block set according to the subchannels occupied by the PSSCH transmission resources in the first resource block set includes:

indexes of the subchannels occupied by the PSSCH transmission resources in the first resource block set being the same as indexes of the subchannels occupied by the PSSCH transmission resources in the second resource block set; and

IRB indexes corresponding to the subchannels occupied by the PSSCH transmission resources in the first resource block set being the same as IRB indexes corresponding to the subchannels occupied by the PSSCH transmission resources in the second resource block set.

In some embodiments, according to the method for selecting sidelink resources described above, the determining subchannels occupied by the PSSCH transmission resources corresponding to the PSCCH in the second resource block set according to the subchannels occupied by the PSSCH transmission resources corresponding to the PSCCH in the first resource block set and the second indication field includes:
index values of the subchannels occupied by the PSSCH transmission resources in the second resource block set being sums of index values of the subchannels occupied by the PSSCH transmission resources in the first resource block set and a difference value indicated in the second indication field.

Embodiments of the present disclosure further provide a control apparatus, applied to a first terminal, including:

a first processing module, configured to perform resource selection and determine transmission resources for PSCCH and PSSCH transmissions; and
a second processing module, configured to perform PSCCH and PSSCH transmission, where a PSCCH is used to carry first-stage sidelink control information, which at least includes resource indication information, and the resource indication information at least includes subchannel indication information and/or resource block set indication information.

Embodiments of the present disclosure further provide a control apparatus, applied to a second terminal, including:

a third processing module, configured to receive a PSCCH sent by a first terminal; and

a fourth processing module, configured to determine PSSCH transmission resources and target transmission resources corresponding to the PSCCH according to resources corresponding to the PSCCH and resource indication information, where the target transmission resources are transmission resources reserved by the PSCCH, the resource indication information is included in first-stage sidelink control information, the first-stage sidelink control information is carried on the PSCCH, and the resource indication information at least includes subchannel indication information and/or resource block set indication information.

Embodiments of the present disclosure further provide a terminal device, including a processor, a memory, and a computer program stored on the memory and runnable on the processor, where the computer program, when executed by the processor, implements the steps of the above method for selecting sidelink resources in an unlicensed spectrum, applied to the first terminal, or the steps of the above method for selecting sidelink resources in an unlicensed spectrum, applied to the second terminal.

Embodiments of the present disclosure further provide a computer-readable storage medium, having a computer program stored therein, where the computer program, when executed by a processor, implements the steps of the above method for selecting sidelink resources in an unlicensed spectrum, applied to the first terminal, or the steps of the above method for selecting sidelink resources in an unlicensed spectrum, applied to the second terminal.

Compared with the related art, the method and apparatus for selecting sidelink resources in an unlicensed spectrum, and the terminal according to the embodiments of the present disclosure at least have the following beneficial effects:

in the embodiments of the present disclosure, the transmission resources corresponding to the transmissions are determined through the resource selection, the first-stage sidelink control information including the resource indication information is carried on the PSCCH, and then the resource indication information is transmitted through PSCCH sending and receiving, thereby achieving resource indication in SL-U; and meanwhile, the transmission resources are indicated through the subchannel indication information and/or the resource block set indication information in the resource indication information, thereby avoiding the signaling overhead associated with using a plurality of FRIVs for indication in related art.

**Brief Description of the Drawings**

Fig. 1 is a schematic flowchart of a method for selecting sidelink resources in an unlicensed spectrum, applied to a first terminal according to some embodiments of the present disclosure;

Fig. 2 is a schematic diagram of transmission resources occupying resource block sets within a resource pool;

Fig. 3 is a first schematic diagram of the transmission resources occupying subchannels in contiguous resource block sets;

Fig. 4 is a second schematic diagram of the transmission resources occupying the subchannels in the contiguous resource block sets;

Fig. 5 is a third schematic diagram of the transmission resources occupying the subchannels in the contiguous resource block sets;

Fig. 6 is a first schematic flowchart of a method for selecting sidelink resources in an unlicensed spectrum, applied to a second terminal according to some embodiments of the present disclosure;

Fig. 7 is a second schematic flowchart of a method for selecting sidelink resources in an unlicensed spectrum, applied to a second terminal according to some embodiments of the present disclosure;

Fig. 8 is a third schematic flowchart of a method for selecting sidelink resources in an unlicensed spectrum, applied to a second terminal according to some embodiments of the present disclosure;

Fig. 9 is a fourth schematic flowchart of a method for selecting sidelink resources in an unlicensed spectrum, applied to a second terminal according to some embodiments of the present disclosure;

Fig. 10 is a schematic structural diagram of a control apparatus applied to a first terminal according to some embodiments of the present disclosure; and

Fig. 11 is a schematic structural diagram of a control apparatus applied to a second terminal according to some embodiments of the present disclosure.

**Detailed Description of the Embodiments**

To make the technical problems to be solved, the technical solutions, and the advantages of the present disclosure clearer, a detailed description will be provided below in conjunction with the accompanying drawings and specific embodiments. In the following descriptions, specific configurations, particular component details, etc. are provided solely to assist in a comprehensive understanding of the embodiments of the present disclosure. Therefore, those skilled in the art should realize that various changes and modifications may be made to the embodiments described herein without departing from the scope and spirit of the present disclosure. Additionally, for clarity and conciseness, descriptions of known functions and structures are omitted.

It should be understood that throughout the specification, references to "an embodiment" or "some embodiments" imply that specific features, structures, or characteristics associated with the embodiment are included in at least one embodiment of the present disclosure. Therefore, the appearance of "in an embodiment" or "in some embodiments" throughout the specification does not necessarily refer to the same embodiment. Further, these specific features, structures, or characteristics may be combined in one or more embodiments in any suitable manner.

In various embodiments of the present disclosure, it should be understood that the serial numbers of the following processes do imply an execution sequence, and the execution sequence of the various processes should be determined according to functions and internal logics, and should not limit an implementation process of the embodiments of the present disclosure.

It should be understood that the term "and/or" used herein is merely a description of an association relationship between associated objects, indicating that three relationships may exist. For example, A and/or B may represent three cases: the existence of A alone, the existence of both A and B, and the existence of B alone. In addition, the character "/" herein generally indicates an "or" relationship between the preceding and succeeding associated objects.

In the embodiments provided in the present disclosure, it should be understood that "B corresponding to A" indicates that B is associated with A, and B may be determined according to A. It should also be understood that determining B according to A does not imply that B is determined solely according to A, and may also be determined according to A and/or other information.

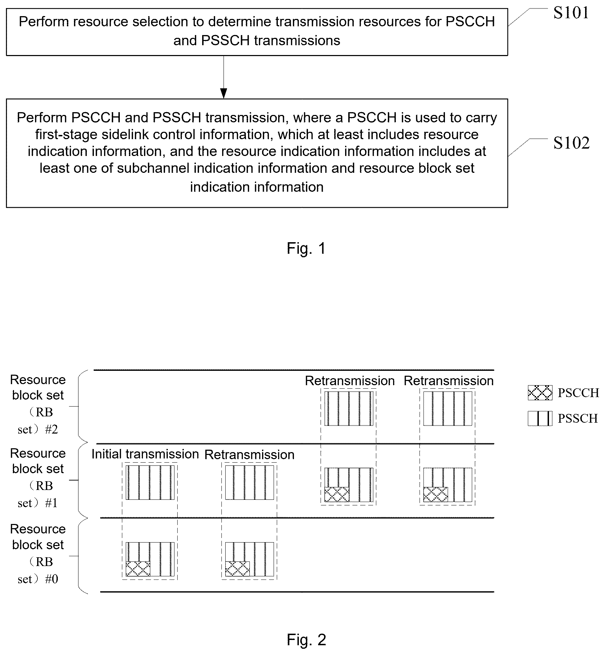

Referring to FIG. 1, some embodiments of the present disclosure provide a method for selecting sidelink resources in an unlicensed spectrum, applied to a first terminal, including:

Step S101: Perform resource selection to determine transmission resources for PSCCH and PSSCH transmissions. In this step, the first terminal performs the resource selection in a resource selection window to determine the transmission resources corresponding to each PSCCH and PSSCH transmission in a transport block, thereby performing PSCCH and PSSCH transmission according to the corresponding transmission resources. Each PSCCH and PSSCH transmission in the transport block includes an initial transmission and at least one retransmission.

Step S102: Perform PSCCH and PSSCH transmission, where the PSCCH is used to carry first-stage sidelink control information, which at least includes resource indication information, and the resource indication information at least includes subchannel indication information and/or resource block set indication information. In this step, the PSCCH and PSSCH transmission is performed according to the transmission resources obtained in the previous step, which is specifically performed in sequence.

During each PSCCH and PSSCH transmission, the PSCCH carries the first-stage sidelink control information. The first-stage sidelink control information at least includes transmission resources for indicating the current PSSCH, or transmission resources for the current PSSCH and subsequent PSCCH and PSSCH transmission resources reserved by the current PSCCH. In some embodiments, in a case where transmission resources for four transmissions are acquired and a configured PSCCH reserves up to three transmission resources, the PSCCH corresponding to the transmissions may indicate transmission resources corresponding to the current PSSCH, as well as transmission resources corresponding to a first retransmission and a second retransmission. By carrying the resource indication information in the PSCCH, a second terminal for receiving may be allowed to determine the transmission resources required by the corresponding transmission, thereby achieving complete reception of the PSCCH and PSSCH.

In some embodiments, the resource indication information includes resource block set indication information for indicating a resource block set occupied by the transmission resources and/or subchannel indication information for indicating subchannels occupied by target transmission resources. Therefore, the second terminal is allowed to accurately determine the resource block set and/or the subchannels occupied by the required transmission resources.

In summary, according to these embodiments, the first terminal performs the resource selection to determine the transmission resources corresponding to the transmissions. The first-stage sidelink control information including the resource indication information is carried on the PSCCH, and therefore through the PSCCH transmission, the resource indication information is sent to the second terminal, thereby achieving resource indication in SL-U. Meanwhile, the transmission resources are indicated through the subchannel indication information and/or the resource block set indication information in the resource indication information, thereby avoiding the significant signaling overhead associated with using a plurality of FRIVs for indication in related art.

In some embodiments, according to the method for selecting sidelink resources described above, the transmission resources occupy one or more contiguous resource block sets.

In some embodiments, the transmission resources corresponding to a single PSCCH and PSSCH transmission may occupy a single resource block set, thereby reducing the probability of failing in PSCCH and PSSCH transmission due to channel access failures. In some embodiments, the transmission resources may also occupy a plurality of resource block sets, but the plurality of resource block sets need to be contiguous, thereby rapidly determining all resource block sets by determining a starting resource block set, and reducing the overhead associated with resource indication. In this case, the number of resource block sets occupied by each transmission resource may be the same. For example, as shown in Fig. 2, a resource pool is configured with three resource block sets: RB set#0, RB set#1, and RB set#2. The transmission resources corresponding to an initial transmission and a first retransmission occupy contiguous RB set#0 and RB set#1, while the transmission resources corresponding to a second retransmission and a third retransmission occupy contiguous RB set#1 and RB set#2.

It should be noted that the description of "transmission resources occupying a resource block set" herein does not imply that the transmission resources occupy all subchannels in the resource block set, but rather that at least some subchannels occupied by the transmission resources are located in the resource block set.

In some embodiments, according to the method for selecting sidelink resources described above, the number of resource block sets occupied by the transmission resources corresponding to different PSCCH and PSSCH transmissions belonging to the same transport block is the same.

In some embodiments, during resource selection, the number of resource block sets occupied by the transmission resources corresponding to each transmission in the same transport block may be made the same to facilitate unified indication, thereby further reducing the overhead associated with the resource indication. Herein, it is emphasized only that the number of the RB sets occupied by each transmission is the same, but indexes of the RB sets corresponding the different transmissions may be different. In particular, the RB sets occupied by the transmission resources corresponding to any PSCCH and PSSCH transmission in the same transport block are contiguous, and the number of the RB sets occupied by the transmission resources corresponding to each PSCCH and PSSCH transmission is the same. For example, the resource pool is configured with five RB sets. The initial transmission occupies the first RB set and the second RB set, the first retransmission occupies the second RB set and the third RB set, and the second retransmission occupies the fourth RB set and the fifth RB set.

In some embodiments,, according to the method for selecting sidelink resources described above, in a case where the transmission resources occupy a plurality of contiguous resource block sets, the transmission resources also satisfy at least one of the following:

indexes of subchannels occupied by the transmission resources are contiguous across the different resource block sets, that is, the indexes of the subchannels occupied by the transmission resources are contiguous in the contiguous resource block sets. In some embodiments, in an example where the transmission resources for a single transmission occupy two contiguous resource block sets, and each resource block set contains 5 subchannels (with subchannel index values ranging from 0 to 4 in the first resource block set and subchannel index values ranging from 5 to 9 in the second resource block set), the transmission resources for the single transmission occupy a total of 4 subchannels: the subchannel 3 and the subchannel 4 in the first resource block set, and the subchannel 5 and the subchannel 6 in the second resource block set. For another example, the transmission resources for a single transmission occupy a total of 4 subchannels: the subchannel 4 in the first resource block set, and the subchannel 5, the subchannel 6, and the subchannel 7 in the second resource block set.

It should be noted that the contiguous subchannel indexes are not equivalent to contiguous subchannel index values. For example, in some embodiments, the subchannel 0 and the subchannel 1 are contiguous, and the subchannel 9 and the subchannel 0 may also be contiguous.

In the different resource block sets, the indexes of the subchannels occupied by the transmission resources are contiguous. That is, the transmission resources occupy the subchannels with the contiguous indexes in any resource block set, but the subchannel indexes between adjacent resource block sets may not be contiguous, and the indexes of the occupied subchannels in the resource block sets may also be different.

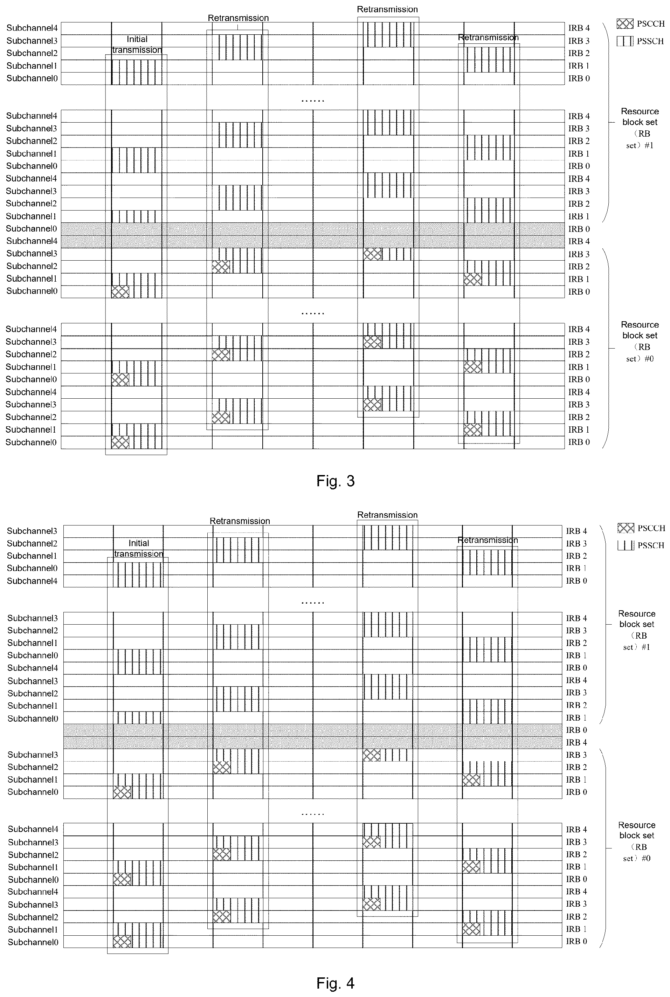

As shown in Fig. 3, in some embodiments, the transmission resources occupy two resource block sets: RB set#0 and RB set#1. The transmission resources corresponding to the initial transmission occupy the contiguous subchannels 0 and 1 in RB set#0, as well as the contiguous subchannels 0 and 1 in RB set#1.

As shown in Fig. 4, in some embodiments, the transmission resources occupy two resource block sets: RB set#0 and RB set#1. The transmission resources corresponding to the initial transmission occupy the contiguous subchannels 0 and 1 in RB set#0, as well as the contiguous subchannels 4 and 0 in RB set#1. It should be noted that the contiguous subchannel indexes are not equivalent to contiguous subchannel index values. For example, in these embodiments, the subchannel 0 and the subchannel 1 are contiguous, and the subchannel 4 and the subchannel 0 may also be contiguous.

In the different resource block sets, the number of subchannels occupied by the transmission resources is the same. That is, the transmission resources occupy the same number of subchannels in the different resource block sets, but the indexes of the occupied subchannels in the resource block sets may be the same or different, as illustrated by the transmission resources corresponding to the initial transmission in Fig. 3 and Fig. 4, which will not be repeated herein.

The number of subchannels occupied by the transmission resources in at least one resource block set is different from the number of subchannels occupied by the transmission resources in other resource block sets. That is, the number of subchannels occupied by the transmission resources may also vary across the resource block sets.

In some embodiments, the transmission resources occupy two resource block sets: RB set#0 and RB set#1. Current transmission resources corresponding to the initial transmission occupy subchannels corresponding to two subchannel indexes (e.g., the subchannel 0 and the subchannel 1) in RB set#0 and a subchannel corresponding to one subchannel index (e.g., the subchannel 0) in RB set#1.

In some embodiments, the transmission resources occupy three resource block sets: RB set#0, RB set#1, and RB set#2. The current transmission resources corresponding to the initial transmission occupy subchannels corresponding to two subchannel indexes (e.g., the subchannel 0 and the subchannel 1) in RB set#0, a subchannel corresponding to one subchannel index (e.g., the subchannel 0) in RB set#1, and a subchannel corresponding to one subchannel index (e.g., the subchannel 0) in RB set#2, or subchannels corresponding two subchannel indexes (e.g., the subchannel 0 and the subchannel 1) in RB set#2, or subchannels corresponding to three subchannel indexes (e.g., the subchannel 0, the subchannel 1, and the subchannel 2) in RB set#2.

It should be noted that the case where the transmission resources occupy a plurality of contiguous resource block sets includes: the transmission resources corresponding to each transmission in the same transport block occupying a plurality of contiguous resource block sets, and the number of the resource block sets occupied by the transmission resources corresponding to each transmission being the same, or the transmission resources corresponding to each transmission in the same transport block occupying a plurality of contiguous resource block sets, and transmission resources corresponding to at least two transmissions occupying a different number of resource block sets.

In some embodiments, according to the method for selecting sidelink resources described above, in a case where the number of subchannels occupied by the transmission resources is the same across the different resource block sets, and indexes of the occupied subchannels are contiguous, the transmission resources also satisfy at least one of the following:

in the different resource block sets, the indexes of the subchannels occupied by the transmission resources are the same. As shown in Fig. 3, in some embodiments, the transmission resources occupy two resource block sets: RB set#0 and RB set#1. Current transmission resources corresponding to the initial transmission occupy subchannels corresponding to two subchannel indexes (e.g., the subchannel 0 and the subchannel 1) in RB set#0 and a subchannel corresponding to two subchannel indexes (e.g., the subchannel 0 and the subchannel 1) in RB set#1.

IRB indexes corresponding to the subchannels occupied by the transmission resources are the same across the different resource block sets. As shown in Fig. 3, in some embodiments, the transmission resources occupy two resource block sets: RB set#0 and RB set#1. Current transmission resources corresponding to the initial transmission occupy subchannels corresponding to two subchannel indexes (e.g., the subchannel 0 and the subchannel 1) in RB set#0 and subchannels corresponding to two subchannel indexes (e.g., the subchannel 0 and the subchannel 1) in RB set#1. Moreover, the subchannel 0 in both RB set#0 and RB set#1 corresponds to the same IRB index, and subchannels 1 in both RB set#0 and RB set#1 correspond to the same IRB index.

As shown in Fig. 4, in some embodiments, the transmission resources occupy two resource block sets: RB set#0 and RB set#1. Current transmission resources corresponding to the initial transmission occupy subchannels corresponding to two subchannel indexes (e.g., the subchannel 0 and the subchannel 1) in RB set#0 and subchannels corresponding to two subchannel indexes (e.g., the subchannel 4 and the subchannel 0) in RB set#1. Moreover, the subchannel 0 in RB set#0 and the subchannel 4 in RB set#1 correspond to the same IRB index, and the subchannel 1 in RB set#0 and the subchannel 0 in RB set#1 correspond to the same IRB index.

In some embodiments, according to the method for selecting sidelink resources described above, the subchannel indication information includes a first indication field. The first indication field is used to indicate the subchannels occupied by the PSSCH transmission resources and the target transmission resources corresponding to the PSCCH in the first resource block set.

A resource block set index corresponding to the first resource block set serves as a resource block set index reference value for all resource block sets occupied by the PSSCH transmission resources and the target transmission resources. The target transmission resources are transmission resources reserved by the PSCCH.

In some embodiments, the resource indication information includes subchannel indication information. The subchannel indication information includes a first indication field. The first indication field may indicate subchannels occupied by the PSSCH transmission resources and the target transmission resources corresponding to the PSSCH in the first resource block set. Meanwhile, based on the aforementioned correspondence between the subchannels in the plurality of contiguous resource block sets (e.g., the indexes of the subchannels occupied by the transmission resources are contiguous across the different resource block sets, and the number of the subchannels occupied by the transmission resources is the same across the different resource block sets; or, in the different resource block sets, indexes of subchannels occupied by the transmission resources are contiguouscontiguous, and the number of the subchannels occupied by the transmission resources is the same across the different resource block sets), the second terminal can conveniently and accurately determine the subchannels occupied by the PSSCH transmission resources and the target transmission resources across all the resource block sets.

It should be noted that in these embodiments, the PSCCH refers to a PSCCH carrying the first-stage sidelink control information that includes the resource indication information. The target transmission resources refer to reserved transmission resources for sending or receiving after the current sending. For example, the target transmission resources are resources reserved for a next PSCCH and PSSCH transmission. In some embodiments, in a case where the current transmission being performed is the initial transmission, the PSSCH transmission resources are those corresponding to the initial transmission, and the target transmission resources are PSCCH and PSSCH transmission resources corresponding to the retransmission.

It should be noted that the resource block set index corresponding to the first resource block set herein serves as the resource block set index reference value for all the resource block sets occupied by the PSSCH transmission resources and the target transmission resources. The resource block set index reference value is a maximum value or a minimum value among resource block set index values corresponding to all the resource block sets occupied by the PSSCH transmission resources and the target transmission resources.

It should also be noted that the first resource block set is a reference RB set corresponding to the PSSCH and the target resources. That is, each transmission corresponds to a reference RB set. For example, if the initial transmission occupies RB set#1 and RB set#2, and the retransmission occupies RB set#3 and RB set#4, the reference RB set for the initial transmission is RB set#1, and the reference RB set for the retransmission is RB set#3.

In some embodiments, according to the method for selecting sidelink resources described above, the method for selecting sidelink resources further includes:

determining the first indication field according to at least one of the following:

a starting subchannel index of the target transmission resources in the first resource block set, the number of subchannels occupied by the PSSCH transmission resources and the target transmission resources in the first resource block set, and the total number of subchannels in the first resource block set.

In some embodiments, the first indication field is represented in a numerical form, which may be derived according to a preset algorithm and the resources determined during the resource selection. In some embodiments, taking an FRIV method as an example, required parameters are the starting subchannel index of the target transmission resources in the first resource block set, the number of subchannels occupied by the PSSCH transmission resources and the target transmission resources in the first resource block set, and the total number of subchannels in the first resource block set. A corresponding algorithm may be invoked for calculation according to the specific number of transmission resources that need to be indicated. For example:

in a case where the subchannel indication information may indicate up to 2 transmission resources, the first indication field is represented as:

$$\mathrm{FRIV} = n_{subCH,1}^{start} + \sum_{i=1}^{L_{subCH}-1} \left( N_{subchannel}^{SL} + 1 - i \right)$$

Alternatively, in a case where the subchannel indication information may indicate up to 3 transmission resources, the first indication field is represented as:

$$\mathrm{FRIV} = n_{subCH,1}^{start} + n_{subCH,2}^{start} \left( N_{subchannel}^{SL} + 1 - L_{subCH} \right) + \sum_{i=1}^{L_{subCH}-1} \left( N_{subchannel}^{SL} + 1 - i \right)^2$$

$n_{subCH,1}^{start}$ represents a starting subchannel index of a first reserved transmission resource in the corresponding first resource block set;

$n_{subCH,2}^{start}$ represents a starting subchannel index of a second reserved transmission resource in the corresponding first resource block set; and

$N_{subchannel}^{SL}$ represents the number of subchannels in the first resource block set, where the number of subchannels in the first resource block set corresponding to each transmission resource is the same.

$L_{subCH}$ represents the number of subchannels occupied by the transmission resources in a resource block set.

In some embodiments, as shown in Fig. 3 or 4, assume the initial transmission reserves the PSSCH transmission resources corresponding to the initial transmission and the target transmission resources corresponding to the first retransmission and the second retransmission, and the first resource block set is RB set#0, the first indication field, i.e., FRIV, is determined according to information about subchannels occupied by each above transmission in RB set#0. The subchannel information includes: a starting subchannel "subchannel 2" occupied by the first retransmission, with 2 subchannels occupied; a starting subchannel "subchannel 3" occupied by the second retransmission, with 2 subchannels occupied; and the total number of subchannels in the first resource block set being 5. The subchannel indication information may indicate up to 3 transmission resources, and therefore the first indication field is FRIV= 2+3*(5+1-2) +(5+1-1)*(5+1-1)=39.

Similarly, the second terminal may derive an occupied starting subchannel index value and the number of occupied subchannels for the target transmission resources in the first resource block set according to the first indication field and the total number of subchannels in the first resource block set.

It should also be noted that the number of the target transmission resources may be two, and in this case, the first resource block set includes a first resource block set corresponding to the first target transmission resource and a first resource block set corresponding to the second target transmission resource.

In some embodiments, according to the method for selecting sidelink resources described above, the subchannel indication information further includes a second indication field, where the second indication field represents a difference value between an index value of a second target subchannel and an index value of a first target subchannel.

The index value of the first target subchannel serves as a first index reference value for subchannels occupied by the target transmission resources and the PSSCH transmission resources in the first resource block set. The index value of the second target subchannel serves as a second index reference value for subchannels occupied by the target transmission resources and the PSSCH transmission resources in a second resource block set, where the second resource block set is a resource block set other than the first resource block set occupied by the PSSCH transmission resources and the target transmission resources.

In some embodiments, the resource indication information includes subchannel indication information. In addition to the above first indication field, the subchannel indication information also includes a second indication field. The second indication field may indicate an index value relationship between subchannels in different resource block sets, thereby determining subchannels in the second resource block set based on the first indication field. The second resource block set is a resource block set other than the first resource block set occupied by the PSSCH transmission resources and the target transmission resources.

In some embodiments, the second indication field represents a difference value between an index value of a second target subchannel and an index value of a first target subchannel.

It should be noted that the index value of the first target subchannel serves as the first index reference value for subchannels occupied by the target transmission resources and the PSSCH transmission resources in the first resource block set. The index value of the second target subchannel serves as the second index reference value for subchannels occupied by the target transmission resources and the PSSCH transmission resources in the second resource block set, where the second resource block set is a resource block set other than the first resource block set occupied by the PSSCH transmission resources and the target transmission resources.

It should also be noted that the first index reference value is a maximum value or a minimum value from subchannel index values of all the subchannels occupied by the target transmission resources and the PSSCH transmission resources in the first resource block set.

The second index reference value is a maximum value or a minimum value from subchannel index values of all the subchannels occupied by the target transmission resources and the PSSCH transmission resources in the first resource block set.

In some embodiments, both the first index reference value and the second index reference value are either the maximum values or the minimum values.

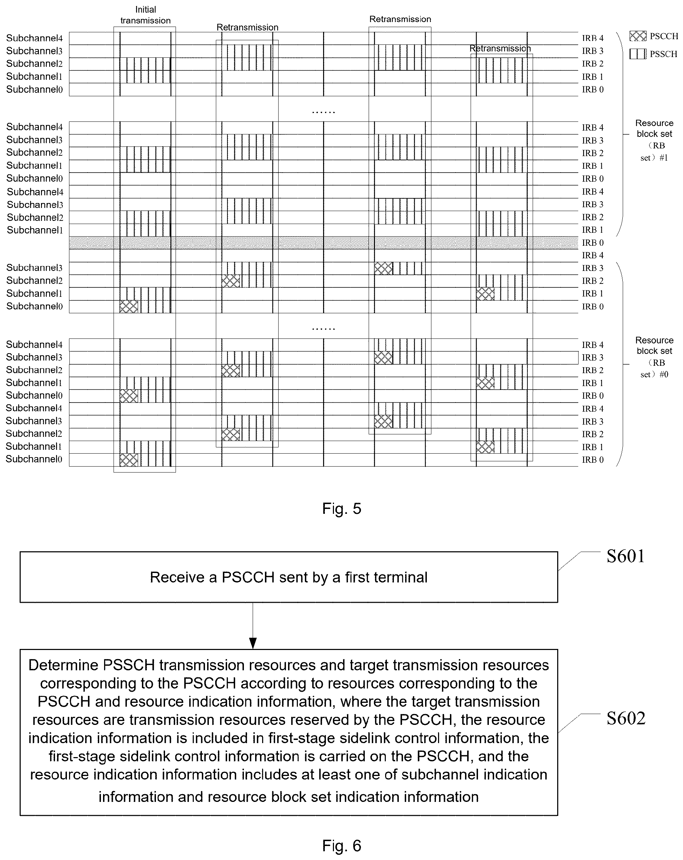

Referring to Fig. 5, in some embodiments, the initial transmission and each retransmission occupy the same resource block set, but subchannel indexes or IRB indexes occupied by each transmission in RB set#0 and RB set#1 have no correspondence, which may be equal or unequal. The first resource block set corresponding to the first indication field is determined to be RB set#0, and a value of the first indication field, namely FRIV, is determined according to subchannel occupation information in RB set#0. Assuming that the initial transmission reserves the first retransmission and the second retransmission, the FRIV in the 1$^{st}$-stage SCI of the initial transmission follows FRIV= 2 + 3(5+1-2) + (5+1-1)(5+1-1) = 39.

Additionally, the 1st-stage SCI of the initial transmission also needs to carry frequency domain offset values for a second target subchannel (in these embodiments, the first subchannel in RB set#1) occupied by each transmission in other resource block sets and a first target subchannel (in these embodiments, the first subchannel in RB set#1) occupied in the first resource block set, namely the second indication field in the subchannel indication information. As shown in Fig. 5, through calculation, the offset value for the initial transmission is 1, the offset value for the first retransmission is 0, and the offset value for the second retransmission is -1.

In some embodiments, according to the method for selecting sidelink resources described above, the resource block set indication information is used to indicate information about resource block sets occupied by the PSSCH transmission resources and the target transmission resources corresponding to the PSCCH.

In some embodiments, the resource indication information includes resource block set indication information. The resource block set indication information may indicate information about resource block sets occupied by the PSSCH transmission resources and the target transmission resources corresponding to the PSCCH, thereby facilitating the second terminal in accurately determining the resource block sets occupied by the PSSCH transmission resources and the target transmission resources.

In some embodiments, according to the method for selecting sidelink resources described above, the method for selecting sidelink resources further includes:

determining the resource block set indication information according to at least one of the following:

the number of resource block sets occupied by the PSSCH transmission resources and the target transmission resources, an index of a starting resource block set occupied by the target transmission resources, and the total number of resource block sets within the resource pool.

In some embodiments, the resource block set indication information is represented in a numerical form, which may be derived according to a preset algorithm and the resources determined during the resource selection. In some embodiments, taking a RIV method as an example, required parameters are the number of resource block sets occupied by PSSCH transmission resources and target transmission resources, an index of a starting resource block set occupied by the target transmission resources, and the total number of resource block sets within the resource pool. Then, a corresponding algorithm may be invoked for calculation according to the specific number of transmission resources that need to be indicated. For example:

in a case where the resource block set indication information may indicate up to 2 transmission resources, the resource block set indication information is represented as:

$$\text{RIV} = n_{RBset,1}^{start} + \sum_{i=1}^{L_{RBset}-1} (N_{RBset} + 1 - i)$$

in a case where the resource block set indication information may indicate up to 2 transmission resources, the resource block set indication information is represented as:

$$\text{RIV} = n_{RBset,1}^{start} + n_{RBset,2}^{start} \times (N_{RBset} + 1 - L_{RBset}) + \sum_{i=1}^{L_{RBset}-1} (N_{RBset} + 1 - i)^2$$

$n_{RBset,1}^{start}$ represents an index of a starting resource block set occupied by a first reserved transmission resource;

$n_{RBset,2}^{start}$ represents an index of a starting resource block set occupied by a second reserved transmission resource;

$N_{RBset}$ represents the total number of resource block sets within the resource pool; and

$L_{RBset}$. represents the number of resource block sets occupied by PSSCH transmission resources corresponding to the PSCCH or reserved transmission resources.

In some embodiments, as shown in Fig. 2, if the resource block set indication information indicates up to 2 transmission resources, namely, a PSSCH transmission resource (corresponding to the initial transmission) and one target transmission resource (corresponding to the first retransmission), with the number of resource block sets within the resource pool being 3, the number of resource block sets occupied by each transmission resource being 2, and the index of the starting resource block set occupied by the second transmission resource (corresponding to the first retransmission) being 0, the resource block set indication information is indicated as RIV = 0 + (3+1-1) = 3.

If the resource block set indication information indicates up to 3 transmission resources, namely, a PSSCH transmission resource (corresponding to the initial transmission) and two target transmission resources (corresponding to the first retransmission and the second retransmission), with the number of resource block sets within the resource pool being 3, the number of resource block sets occupied by each transmission resource being 2, the index of the starting resource block set occupied by the second transmission resource (corresponding to the first retransmission) being 0, and the index of the starting resource block set occupied by the third transmission resource (corresponding to the second retransmission) being 1, the resource block set indication information is indicated as RIV=1+2×(3+1-2)+(3+1-1)2=14.

Referring to Fig. 6, embodiments of the present disclosure further provide a method for selecting sidelink resources in an unlicensed spectrum, applied to a second terminal, including:

Step S601: Receive a PSCCH sent by a first terminal, where in this step, the second terminal receives the PSCCH sent by the first terminal to determine, according to information corresponding to the PSCCH, PSSCH transmission resources and target transmission resources corresponding to the PSCCH, and then the PSSCH transmission resources and target transmission resources are received.

Step S602: Determine PSSCH transmission resources and target transmission resources corresponding to the PSCCH according to resources corresponding to the PSCCH and resource indication information, where the target transmission resources are transmission resources reserved by the PSCCH, the resource indication information is included in first-stage sidelink control information, the first-stage sidelink control information is carried on the PSCCH, and the resource indication information at least includes subchannel indication information and/or resource block set indication information. In this step, the corresponding information may be determined by parsing according to the received PSCCH. For example, according to the resources corresponding to the PSCCH and the resource indication information that is included in the first-stage sidelink control information carried on the PSCCH and that at least includes the subchannel indication information and/or the resource block set indication information, the second terminal can determine the PSSCH transmission resources and the target transmission resources corresponding to the PSCCH according to the resources corresponding to the PSCCH and the resource indication information to facilitate the reception and/or sending of the PSSCH transmission resources and the target transmission resources.

In summary, according to these embodiments, the second terminal receives the PSCCH sent by the first terminal and determines the PSSCH transmission resources and the target transmission resources corresponding to the PSCCH based on the resources corresponding to the PSCCH and the carried resource indication information, thereby achieving resource indication in SL-U. The transmission resources are indicated through the subchannel indication information and/or the resource block set indication information in the resource indication information, thereby avoiding the significant signaling overhead associated with using a plurality of FRIVs in related art. It should be noted that the PSCCH received by the second terminal refers to a PSCCH in a single transmission.

In some embodiments, according to the method for selecting sidelink resources described above, in a case where the resource indication information includes the subchannel indication information, the subchannel indication information includes: a first indication field, or both a first indication field and a second indication field.

The first indication field is used to determine at least one of the following: the number of subchannels occupied by the PSSCH transmission resources and the target transmission resources in respective first resource block sets, and a starting subchannel occupied by the target transmission resources in the first resource block set.

The second indication field is used to determine a difference value between an index value of a second target subchannel and an index value of a first target subchannel. The index value of the first target subchannel serves as a first index reference value for subchannels occupied by the PSSCH transmission resources and the target transmission resources in the first resource block set. The index value of the second target subchannel serves as a second index reference value for subchannels occupied by the PSSCH transmission resources and the target transmission resources in a second resource block set.

A resource block set index corresponding to the first resource block set serves as a resource block set index reference value for all resource block sets occupied by the PSSCH transmission resources and the target transmission resources.

The second resource block set is a resource block set other than the first resource block set occupied by the PSSCH transmission resources and the target transmission resources.

In some embodiments, in a case where the resource indication information includes the subchannel indication information and the subchannel indication information includes the first indication field, the first indication field may indicate subchannels occupied by PSSCH transmission resources and target transmission resources corresponding to the PSCCH in the first resource block set, and specifically, may indicate the number of subchannels occupied by the PSSCH transmission resources and the target transmission resources in the respective first resource block sets, as well as a starting subchannel occupied by the target transmission resources in the first resource block set.

It should be noted that in these embodiments, the PSCCH refers to a received PSCCH. The target transmission resources refer to reserved transmission resources for sending or receiving after the current receiving. For example, the target transmission resources are resources reserved for a next PSCCH and PSSCH transmission.

It should be noted that in these embodiments, the resource block set index corresponding to the first resource block set serves as the resource block set index reference value for all the resource block sets occupied by the PSSCH transmission resources and the target transmission resources. The resource block set index reference value is a maximum value or a minimum value among resource block set index values corresponding to all the resource block sets occupied by the PSSCH transmission resources and the target transmission resources.

In some embodiments, the subchannel indication information further includes a second indication field. The second indication field may indicate an index value relationship between subchannels in different resource block sets, thereby determining subchannels in the second resource block set based on the first indication field. The second resource block set is a resource block set other than the first resource block set occupied by the PSSCH transmission resources and the target transmission resources.

In some embodiments, the second indication field represents a difference value between an index value of a second target subchannel and an index value of a first target subchannel.

It should be noted that the index value of the first target subchannel serves as the first index reference value for subchannels occupied by the target transmission resources and the PSSCH transmission resources in the first resource block set. The index value of the second target subchannel serves as the second index reference value for subchannels occupied by the target transmission resources and the PSSCH transmission resources in the second resource block set, where the second resource block set is a resource block set other than the first resource block set occupied by the PSSCH transmission resources and the target transmission resources.

It should also be noted that the first index reference value is a maximum value or a minimum value from subchannel index values of all the subchannels occupied by the target transmission resources and the PSSCH transmission resources in the first resource block set.

The second index reference value is a maximum value or a minimum value from subchannel index values of all the subchannels occupied by the target transmission resources and the PSSCH transmission resources in the first resource block set.

In some embodiments, both the first index reference value and the second index reference value are either the maximum values or the minimum values.

In some embodiments, according to the method for selecting sidelink resources described above, in a case where the resource indication information includes the resource block set indication information, the resource block set indication information is used to determine at least one of the following: the number of resource block sets occupied by the PSSCH transmission resources, the number of resource block sets occupied by the target transmission resources, and an index value of a starting resource block set occupied by the target transmission resources.

In some embodiments, the resource indication information further includes the resource block set indication information. The resource block set indication information may indicate information about resource block sets occupied by the PSSCH transmission resources and the target transmission resources corresponding to the PSCCH, thereby facilitating the second terminal in accurately determining the resource block sets occupied by the PSSCH transmission resources and the target transmission resources.

In some embodiments, the resource block set indication information may determine at least one of the number of resource block sets occupied by the PSSCH transmission resources, the number of resource block sets occupied by the target transmission resources, and an index value of a starting resource block set occupied by the target transmission resources.

In some embodiments, according to the method for selecting sidelink resources described above, the step of determining PSSCH transmission resources and target transmission resources corresponding to the PSCCH according to resources corresponding to the PSCCH and resource indication information includes at least one of the following:

determining the PSSCH transmission resources according to the resources corresponding to the PSCCH and the resource indication information, where since the PSCCH corresponding to the PSSCH transmission resources is informed to the second terminal through sending, the PSSCH transmission resources need to be determined based on the resources corresponding to the PSCCH and the resource indication information; and
determining the target transmission resources according to the resource indication information. Indication information related to the target transmission resources is included in the resource indication information, and therefore the indication information may be determined according to the resource indication information.

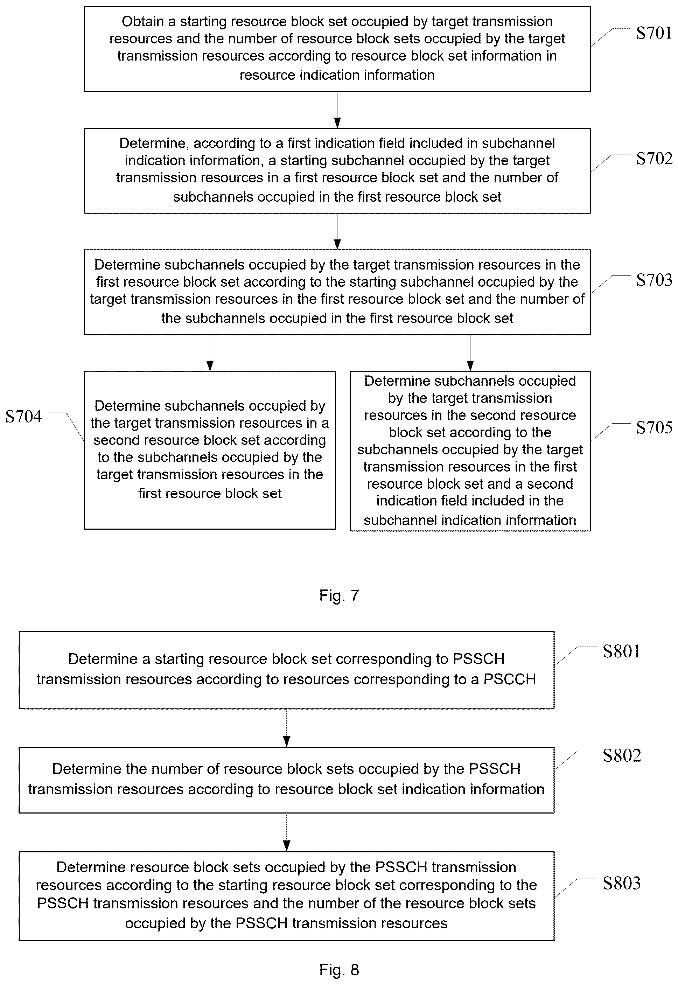

Referring to Fig. 7, in some embodiments, according to the method for selecting sidelink described above, the determining the target transmission resources according to the resource indication information includes at least one of the following:

Step S701: Obtain a starting resource block set occupied by the target transmission resources and the number of resource block sets occupied by the target transmission resources according to resource block set indication information in the resource indication information, where in some embodiments, the starting resource block set occupied by the target transmission resources and the number of the resource block sets occupied by the target transmission resources may be determined according to the resource block set indication information.

Step S702: Determine, according to a first indication field included in the subchannel indication information, a starting subchannel occupied by the target transmission resources in a first resource block set and the number of subchannels occupied in the first resource block set, where in some embodiments, the starting subchannel occupied by the target transmission resources in the first resource block set and the number of the subchannels occupied in the first resource block set are determined according to the first indication field.

Step S703: Determine subchannels occupied by the target transmission resources in the first resource block set according to the starting subchannel occupied by the target transmission resources in the first resource block set and the number of the subchannels occupied in the first resource block set, where in some embodiments, the subchannels occupied by the target transmission resources in the first resource block set are determined according to the following calculation formula:

$$Nindex = mod(Nstart + i - 1, Ntotal)$$

*Nindex* represents a subchannel index of an ith subchannel occupied by the target transmission resources in the first resource block set;

*Nstart* represents a starting subchannel index of a starting subchannel occupied by the target transmission resources in the first resource block set; and

*Ntotal*: represents the total number of subchannels in the first resource block set.

In some embodiments, assume that a starting subchannel occupied by a first target transmission resource in the first resource block set that is determined according to the first indication field, namely the FRIV is the subchannel 4, and two subchannels are occupied; and a determined starting subchannel occupied by a second target transmission resource in the first resource block set is 1, two subchannels are occupied, and the resource pool includes a total of 5 subchannels (the subchannel 0 to the subchannel 4), the subchannels occupied by the first target transmission resource in the first resource block set are the subchannel 4 and the subchannel 0 (mod(4 + 2 - 1, 5) = 0), and the subchannels occupied by the second target transmission resource in the first resource block set are the subchannel 1 and the subchannel 2.

Step S704: Determine subchannels occupied by the target transmission resources in a second resource block set according to the subchannels occupied by the target transmission resources in the first resource block set. That is, since there is a certain correspondence between the subchannels occupied by the target transmission resources determined from each resource block set among a plurality of contiguous resource block sets, the subchannels occupied by the target transmission resources in the second resource block set can be determined based on the correspondence on the basis of obtaining the subchannels occupied by the target transmission resources in the first resource block set.

In some embodiments, the correspondence is as follows: indexes of subchannels occupied in the second resource block set are the same as indexes of subchannels occupied in the first resource block set, and/or, IRB indexes corresponding to the subchannels occupied in the second resource block set are the same as IRB indexes corresponding to the subchannels occupied in the first resource block set.

Step S705: Determine subchannels occupied by the target transmission resources in the second resource block set according to the subchannels occupied by the target transmission resources in the first resource block set and the second indication field included in the subchannel indication information. In a case where the subchannel indication information includes the second indication field, the subchannels occupied by the target transmission resources in the second resource block set may be determined based on the subchannels occupied by the target transmission resources in the first resource block set and the second indication field.

In some embodiments, since the second indication field indicates a difference value between an index value of a second target subchannel and an index value of a first target subchannel, that is, the second indication field indicates a difference value between index values of subchannels corresponding to different resource block sets, index values of the subchannels occupied by the target transmission resources in the second resource block set can be obtained by acquiring sums of the index values of the subchannels occupied by the target transmission resources in the first resource block set and the difference value, thereby determining occupied subchannels according to the index values of the subchannels occupied by the target transmission resources in the second resource block set.

In some embodiments, according to the method for selecting sidelink resources described above, the determining the PSSCH transmission resources according to the resources corresponding to the PSCCH and the resource indication information includes at least one of the following:

determining resource block sets occupied by the PSSCH transmission resources according to the resources corresponding to the PSCCH and the resource block set indication information; and

determining subchannels occupied by the PSSCH transmission resources according to the resources corresponding to the PSCCH and the subchannel indication information.

In some embodiments, since the resource indication information includes the resource block set information for indicating resource block information and/or the subchannel indication information for indicating subchannel information, when determining the PSSCH transmission resources, the second terminal needs to specifically determine the resource block set occupied by the PSSCH transmission resources and/or the subchannels occupied by the PSSCH transmission resources according to specific information included in the resource indication information.

Referring to Fig. 8, in some embodiments, according to the method for selecting sidelink resources described above, the determining resource block sets occupied by the PSSCH transmission resources according to the resources corresponding to the PSCCH and the resource block set indication information includes:

Step S801: Determine a starting resource block set corresponding to the PSSCH transmission resources according to the resources corresponding to the PSCCH, where in some embodiments, a starting resource block or a starting resource block set in the resources corresponding to the PSCCH is the starting resource block set corresponding to the PSSCH transmission resource.

Step S802: Determine the number of resource block sets occupied by the PSSCH transmission resources according to the resource block set indication information, where in some embodiments, the number of resource block sets occupied by the PSSCH transmission resources is equal to the number of resource block sets occupied by the target transmission resources.

Step S803: Determine the resource block sets occupied by the PSSCH transmission resources according to the starting resource block set corresponding to the PSSCH transmission resources and the number of the resource block sets occupied by the PSSCH transmission resources. In a case where acquiring the starting resource block set corresponding to the PSSCH transmission resources and the number of the resource block sets occupied by the PSSCH transmission resources, the starting resource block set and a preset number of contiguous resource block sets next to the starting resource block set are determined as the resource block sets occupied by the PSSCH transmission resource. In some embodiments, when the starting resource block set corresponding to the PSSCH transmission resources is RB set #1 and the number of resource block sets occupied by the PSSCH transmission resources is two, the resource block sets occupied by the PSSCH transmission resources are RB set #1 and RB set #2 respectively.

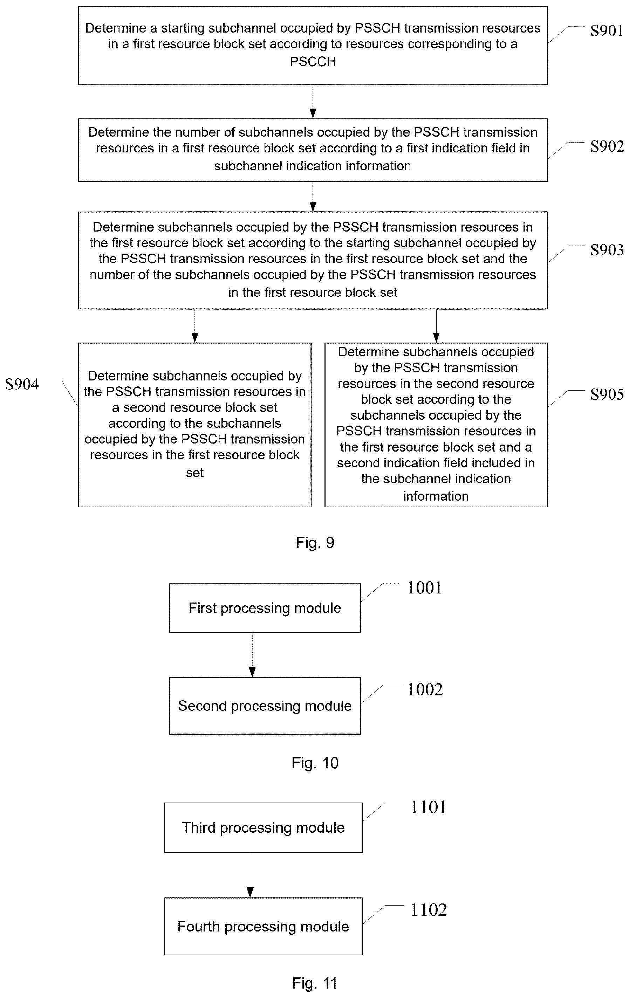

Referring to Fig. 9, in some embodiments, according to the method for selecting sidelink resources described above, the determining subchannels occupied by the PSSCH transmission resources according to the resources corresponding to the PSCCH and the subchannel indication information includes at least one of the following:

Step S901: Determine a starting subchannel occupied by the PSSCH transmission resources in the first resource block set according to the resources corresponding to the PSCCH, where in some embodiments, a subchannel where the resources corresponding to the PSCCH are located or a starting subchannel in the resources corresponding to the PSCCH is the starting subchannel occupied by the PSSCH transmission resource in the first resource block set.

Step S902: Determine the number of subchannels occupied by the PSSCH transmission resources in the first resource block set according to a first indication field in the subchannel indication information.

Step S903: Determine subchannels occupied by the PSSCH transmission resources in the first resource block set according to the starting subchannel occupied by the PSSCH transmission resources in the first resource block set and the number of the subchannels occupied by the PSSCH transmission resources in the first resource block set, where in some embodiments, the subchannels occupied by the PSSCH transmission resources in the first resource block set are determined according to the following calculation formula:

$$Nindex = mod(Nstart + i - 1, Ntotal)$$

*Nindex* represents a subchannel index of an $i^{th}$ subchannel occupied by the PSSCH transmission resources in the first resource block set;

*Nstart* represents a starting subchannel index of a starting subchannel occupied by the PSSCH transmission resources in the first resource block set; and

*Ntotal* represents the total number of subchannels in the first resource block set.

In some embodiments, assume that a starting subchannel occupied by the PSSCH transmission resources in the first resource block set that is determined according to the first indication field, namely the FRIV is the subchannel 4, two subchannels are occupied, and the resource pool includes a total of 5 subchannels (the subchannel 0 to the subchannel 4), the subchannels occupied by the PSSCH transmission resources in the first resource block set are the subchannel 4 and the subchannel 0 (mod(4 + 2 - 1, 5) = 0).

Step S904: Determine subchannels occupied by the PSSCH transmission resources in a second resource block set according to the subchannels occupied by the PSSCH transmission resources in the first resource block set. In some embodiments, since there is a certain correspondence between the subchannels occupied by the PSSCH transmission resources determined from each resource block set among a plurality of contiguous resource block sets, the subchannels occupied by the PSSCH transmission resources in the second resource block set can be determined based on the correspondence on the basis of obtaining the subchannels occupied by the PSSCH transmission resources in the first resource block set.

In some embodiments, the correspondence is as follows: indexes of subchannels occupied in the second resource block set are the same as indexes of subchannels occupied in the first resource block set, and/or, IRB indexes corresponding to the subchannels occupied in the second resource block set are the same as IRB indexes of the subchannels occupied in the first resource block set.

Step S905: Determine subchannels occupied by the PSSCH transmission resources in the second resource block set according to the subchannels occupied by the PSSCH transmission resources in the first resource block set and a second indication field included in the subchannel indication information. In some embodiments, in a case where the subchannel indication information includes the second indication field, the subchannels occupied by the PSSCH transmission resources in the second resource block set may be determined based on the subchannels occupied by the PSSCH transmission resources in the first resource block set and the second indication field.

In some embodiments, since the second indication field indicates a difference value between an index value of a second target subchannel and an index value of a first target subchannel, that is, the second indication field indicates a difference value between index values of subchannels corresponding to different resource block sets, index values of the subchannels occupied by the PSSCH transmission resources in the second resource block set can be obtained by acquiring sums of the index values of the subchannels occupied by the PSSCH transmission resources in the first resource block set and the difference value, thereby determining occupied subchannels according to the index values of the subchannels occupied by the PSSCH transmission resources in the second resource block set.

Referring to Fig. 10, embodiments of the present disclosure further provide a control apparatus, applied to a first terminal, including:

a first processing module 1001, configured to perform resource selection and determine transmission resources for PSCCH and PSSCH transmissions; and

a second processing module 1002, configured to perform PSCCH and PSSCH transmission, where a PSCCH is used to carry first-stage sidelink control information, which at least includes resource indication information, and the resource indication information at least includes subchannel indication information and/or resource block set indication information.

In some embodiments, according to the apparatus described above, the transmission resources occupy one or more contiguous resource block sets.

In some embodiments, according to the apparatus described above, the number of resource block sets occupied by the transmission resources corresponding to different PSCCH and PSSCH transmissions belonging to the same transport block is the same.

In some embodiments, according to the apparatus described above, in a case where the transmission resources occupy a plurality of contiguous resource block sets, the transmission resources also satisfy at least one of the following:

indexes of subchannels occupied by the transmission resources are contiguous across the different resource block sets;

in the different resource block sets, indexes of subchannels occupied by the transmission resources are contiguous;

in the different resource block sets, the number of subchannels occupied by the transmission resources is the same; and

the number of subchannels occupied by the transmission resources in at least one resource block set is different from the number of subchannels occupied by the transmission resources in other resource block sets.

In some embodiments, according to the apparatus described above, in a case where the number of subchannels occupied by the transmission resources is the same across the different resource block sets, and indexes of the occupied subchannels are contiguous, the transmission resources also satisfy at least one of the following:

indexes of the subchannels occupied by the transmission resources are the same across the different resource block sets; and

IRB indexes corresponding to the subchannels occupied by the transmission resources are the same across the different resource block sets.

In some embodiments, according to the apparatus described above, the subchannel indication information includes a first indication field. The first indication field is used to indicate the subchannels occupied by the PSSCH transmission resources and the target transmission resources corresponding to the PSCCH in the first resource block set.

A resource block set index corresponding to the first resource block set serves as a resource block set index reference value for all resource block sets occupied by the PSSCH transmission resources and the target transmission resources. The target transmission resources are transmission resources reserved by the target PSCCH.

In some embodiments, according to the apparatus described above, the apparatus also includes:
a fifth processing module, configured to determine the first indication field according to at least one of the following:
a starting subchannel index of the target transmission resources in the first resource block set, the number of subchannels occupied by the PSSCH transmission resources and the target transmission resources in the first resource block set, and the total number of subchannels in the first resource block set.

In some embodiments, according to the apparatus described above, the subchannel indication information further includes a second indication field, where the second indication field represents a difference value between an index value of a second target subchannel and an index value of a first target subchannel.

The index value of the first target subchannel serves as a first index reference value for subchannels occupied by the target transmission resources and the PSSCH transmission resources in the first resource block set. The index value of the second target subchannel serves as a second index reference value for subchannels occupied by the target transmission resources and the PSSCH transmission resources in a second resource block set, where the second resource block set is a resource block set other than the first resource block set occupied by the PSSCH transmission resources and the target transmission resources.

In some embodiments, according to the apparatus described above, the resource block set indication information is used to indicate information about resource block sets occupied by the PSSCH transmission resources and the target transmission resources corresponding to the PSCCH.

In some embodiments, according to the apparatus described above, the apparatus also includes:
a sixth processing module, configured to determine the resource block set indication information according to at least one of the following:
the number of resource block sets occupied by the PSSCH transmission resources and the target transmission resources, an index of a starting resource block set occupied by the target transmission resources, and the total number of resource block sets within a resource pool.

The control apparatus applied to the first terminal in the embodiments of the present disclosure is an apparatus corresponding to the above embodiments of the method for for selecting sidelink resources in an unlicensed spectrum, applied to the first terminal. All implementation means in the above method embodiments are also applicable to the embodiments of the apparatus, and can also achieve the same technical effects.

Referring to Fig. 11, embodiments of the present disclosure further provide a control apparatus, applied to a second terminal, including:

a third processing module 1101, configured to receive a PSCCH sent by a first terminal; and

a fourth processing module 1102, configured to determine PSSCH transmission resources and target transmission resources corresponding to the PSCCH according to resources corresponding to the PSCCH and resource indication information, where the target transmission resources are transmission resources reserved by the PSCCH, the resource indication information is included in first-stage sidelink control information, the first-stage sidelink control information is carried on the PSCCH, and the resource indication information at least includes subchannel indication information and/or resource block set indication information.

In some embodiments, according to the apparatus described above, in a case where the resource indication information includes the subchannel indication information, the subchannel indication information includes: a first indication field, or both a first indication field and a second indication field.

The first indication field is used to determine at least one of the following: the number of subchannels occupied by the PSSCH transmission resources and the target transmission resources in respective first resource block sets, and a starting subchannel occupied by the target transmission resources in the first resource block set.

The second indication field is used to determine a difference value between an index value of a second target subchannel and an index value of a first target subchannel. The index value of the first target subchannel serves as a first index reference value for subchannels occupied by the PSSCH transmission resources and the target transmission resources in the first resource block set. The index value of the second target subchannel serves as a second index reference value for subchannels occupied by the PSSCH transmission resources and the target transmission resources in a second resource block set.

A resource block set index corresponding to the first resource block set serves as a resource block set index reference value for all resource block sets occupied by the PSSCH transmission resources and the target transmission resources.

The second resource block set is a resource block set other than the first resource block set occupied by the PSSCH transmission resources and the target transmission resources.

In some embodiments, according to the apparatus described above, in a case where the resource indication information includes the resource block set indication information, the resource block set indication information is used to determine at least one of the following: the number of resource block sets occupied by the PSSCH transmission resources, the number of resource block sets occupied by the target transmission resources, and an index value of a starting resource block set occupied by the target transmission resources.

In some embodiments, according to the apparatus described above, the fourth processing module includes at least one of the following:

a first sub-processing module, configured to determine the PSSCH transmission resources according to the resources corresponding to the PSCCH and the resource indication information; and

a second sub-processing module, configured to determine the target transmission resources according to the resource indication information.

In some embodiments, according to the apparatus described above, the second sub-processing module includes at least one of the following:

a first processing unit, configured to obtain a starting resource block set occupied by the target transmission resources and the number of resource block sets occupied by the target transmission resources according to resource block set indication information in the resource indication information;

a second processing unit, configured to determine, according to a first indication field included in the subchannel indication information, a starting subchannel occupied by the target transmission resources in a first resource block set and the number of subchannels occupied in the first resource block set;

a third processing unit, configured to determine subchannels occupied by the target transmission resources in the first resource block set according to the starting subchannel occupied by the target transmission resources in the first resource block set and the number of the subchannels occupied in the first resource block set;

a fourth processing unit, configured to determine subchannels occupied by the target transmission resources in the second resource block set according to the subchannels occupied by the target transmission resources in the first resource block set; alternatively,

a fifth processing unit, configured to determine subchannels occupied by the target transmission resources in the second resource block set according to the subchannels occupied by the target transmission resources in the first resource block set and the second indication field included in the subchannel indication information.

In some embodiments, according to the apparatus described above, the fourth processing unit includes at least one of the following:

indexes of subchannels occupied in the second resource block set are the same as indexes of subchannels occupied in the first resource block set; and

IRB indexes corresponding to the subchannels occupied in the second resource block set are the same as IRB indexes corresponding to the subchannels occupied in the first resource block set.

In some embodiments, according to the apparatus described above, the fifth processing unit includes:
index values of the subchannels occupied by the target transmission resources in the second resource block set being sums of index values of the subchannels occupied by the target transmission resources in the first resource block set and a difference value indicated in the second indication field.

In some embodiments, according to the apparatus described above, the first sub-processing module includes at least one of the following:

a sixth processing unit, configured to determine resource block sets occupied by the PSSCH transmission resources according to the resources corresponding to the PSCCH and the resource block set information; and

a seventh processing unit, configured to determine subchannels occupied by the PSSCH transmission resources according to the resources corresponding to the PSCCH and the subchannel indication information.

In some embodiments, according to the apparatus described above, the sixth processing unit includes:

a first sub-processing unit, configured to determine a starting resource block set corresponding to the PSSCH transmission resources according to the resources corresponding to the PSCCH;

a second sub-processing unit, configured to determine the number of resource block sets occupied by the PSSCH transmission resources according to the resource block set indication information; and

a third sub-processing unit, configured to determine resource block sets occupied by the PSSCH transmission resources according to the starting resource block set corresponding to the PSSCH transmission resources and the number of the resource block sets occupied by the PSSCH transmission resources.

In some embodiments, according to the apparatus described above, the seventh processing unit includes at least one of the following:

a fourth sub-processing unit, configured to determine a starting subchannel occupied by the PSSCH transmission resources in the first resource block set according to the resources corresponding to the PSCCH;

a fifth sub-processing unit, configured to determine the number of subchannels occupied by the PSSCH transmission resources in the first resource block set according to the first indication field in the subchannel indication information;

a sixth sub-processing unit, configured to determine subchannels occupied by the PSSCH transmission resources in the first resource block set according to the starting subchannel occupied by the PSSCH transmission resources in the first resource block set and the number of the subchannels occupied by the PSSCH transmission resources in the first resource block set;

a seventh sub-processing unit, configured to determine subchannels occupied by the PSSCH transmission resources in the second resource block set according to the subchannels occupied by the PSSCH transmission resources in the first resource block set; alternatively,

an eighth sub-processing unit, configured to determine subchannels occupied by the PSSCH transmission resources in the second resource block set according to the subchannels occupied by the PSSCH transmission resources in the first resource block set and the second indication field included in the subchannel indication information.

In some embodiments, according to the apparatus described above, the seventh sub-processing unit includes at least one of the following:

indexes of the subchannels occupied by the PSSCH transmission resources in the first resource block set are the same as indexes of the subchannels occupied by the PSSCH transmission resources in the second resource block set; and

IRB indexes corresponding to the subchannels occupied by the PSSCH transmission resources in the first resource block set are the same as IRB indexes corresponding to the subchannels occupied by the PSSCH transmission resources in the second resource block set.

In some embodiments, according to the apparatus described above, the eighth sub-processing unit includes: index values of the subchannels occupied by the PSSCH transmission resources in the second resource block set being sums of index values of the subchannels occupied by the PSSCH transmission resources in the first resource block set and the difference value indicated in the second indication field.

The control apparatus applied to the second terminal in the present disclosure is an apparatus corresponding to the above embodiment of the resource selection method for a sidelink in an unlicensed spectrum, applied to the second terminal. All implementation means in the above method embodiments are also applicable to the embodiment of the apparatus, and can also achieve the same technical effects.

Embodiments of the present disclosure further provide a terminal device, including a processor, a memory, and a computer program stored on the memory and runnable on the processor, where the computer program, when executed by the processor, implements the steps of the above method for selecting sidelink resources in an unlicensed spectrum, applied to the first terminal, or the steps of the above method for selecting sidelink resources in an unlicensed spectrum, applied to the second terminal.

Embodiments of the present disclosure further provide a computer-readable storage medium, having a computer program stored therein, where the computer program, when executed by a processor, implements the steps of the above method for selecting sidelink resources in an unlicensed spectrum, applied to the first terminal, or the steps of the above method for selecting sidelink resources in an unlicensed spectrum, applied to the second terminal.

In addition, the present disclosure may repeat reference numerals and/or letters in different examples. The repetition is for purposes of simplicity and clarity, which itself does not indicate a relationship between the embodiments and/or settings discussed.

It should also be noted that herein, relational terms such as first and second are only used to distinguish one entity or operation from another entity or operation, and do not necessarily require or imply that such an actual relationship or order exists between these entities or operations. Moreover, terms such as "include", "contain", or any other variants thereof are intended to encompass non-exclusive inclusion.

The above contents are merely optional implementations of the present disclosure. It should be noted that a plurality of improvements and refinements may also be made by those of ordinary skill in the art without departing from the principle of the present disclosure, and these improvements and refinements should be regarded as within the scope of protection of the present disclosure.

**Claims**

1. A method for selecting sidelink resources in an unlicensed spectrum, applied to a first terminal, comprising:

    performing resource selection and determining transmission resources for physical sidelink control channel (PSCCH) and physical sidelink shared channel (PSSCH) transmissions; and
    performing PSCCH and PSSCH transmission, where a PSCCH is used to carry first-stage sidelink control information ($1^{st}$-stage SCI), the first-stage sidelink control information at least comprises resource indication information, and the resource indication information comprises at least one of subchannel indication information and resource block set (RB set) indication information.

2. The method for the selecting sidelink resources as claimed in claim 1, wherein the transmission resources are within one or more contiguous resource block sets.

3. The method for the selecting sidelink resources as claimed in claim 1, wherein the number of resource block sets occupied by the transmission resources corresponding to different PSCCH and PSSCH transmissions belonging to the same transport block (TB) is the same.

4. The method for the selecting sidelink resources as claimed in claim 2 or 3, wherein in a case where the transmission resources are within a plurality of contiguous resource block sets, the transmission resources also satisfy at least one of the following:

    indexes of subchannels occupied by the transmission resources are contiguous across the different resource block sets;
    in the different resource block sets, indexes of subchannels occupied by the transmission resources are contiguous;
    in the different resource block sets, the number of subchannels occupied by the transmission resources is the same; and
    the number of subchannels occupied by the transmission resources in at least one resource block set is different from the number of subchannels occupied by the transmission resources in other resource block sets.

5. The method for the selecting sidelink resources as claimed in claim 4, wherein in a case where the number of subchannels occupied by the transmission resources is the same across the different resource block sets, and indexes of the occupied subchannels are contiguous, the transmission resources also satisfy at least one of the following:

    indexes of the subchannels occupied by the transmission resources are the same across the different resource block sets; and
    indexes of interlaced resource blocks (IRBs) corresponding to the subchannels occupied by the transmission resources are the same across the different resource block sets.

6. The method for the selecting sidelink resources as claimed in claim 1, wherein the subchannel indication information comprises a first indication field, and the first indication field is used to indicate subchannels occupied by PSSCH transmission resources and target transmission resources corresponding to the PSCCH in a first resource block set; and

a resource block set index corresponding to the first resource block set serves as a resource block set index reference value for all resource block sets occupied by the PSSCH transmission resources and the target transmission resources, and the target transmission resources are transmission resources reserved by the PSCCH.

7. The method for the selecting sidelink resources as claimed in claim 6, further comprising:
determining the first indication field according to at least one of the following:
a starting subchannel index of the target transmission resources in the first resource block set, the number of subchannels occupied by the PSSCH transmission resources and the target transmission resources in the first resource block set, and the total number of subchannels in the first resource block set.

8. The method for the selecting sidelink resources as claimed in claim 6 or 7, wherein the subchannel indication information further comprises a second indication field, and the second indication field represents a difference value between an index value of a second target subchannel and an index value of a first target subchannel; and
the index value of the first target subchannel serves as a first index reference value for subchannels occupied by the target transmission resources and the PSSCH transmission resources in the first resource block set, the index value of the second target subchannel serves as a second index reference value for subchannels occupied by the target transmission resources and the PSSCH transmission resources in a second resource block set, and the second resource block set is a resource block set other than the first resource block set occupied by the PSSCH transmission resources and the target transmission resources.

9. The method for the selecting sidelink resources as claimed in any one of claims 1 to 3, wherein the resource block set indication information is used to indicate information about resource block sets occupied by the PSSCH transmission resources and the target transmission resources corresponding to the PSCCH.

10. The method for the selecting sidelink resources as claimed in claim 9, further comprising:
determining the resource block set indication information according to at least one of the following:
the number of resource block sets occupied by the PSSCH transmission resources and the target transmission resources, an index of a starting resource block set occupied by the target transmission resources, and the total number of resource block sets within a resource pool.

11. A method for selecting sidelink resources in an unlicensed spectrum, applied to a second terminal, comprising:

receiving a physical sidelink control channel (PSCCH) sent by a first terminal; and
determining PSSCH transmission resources and target transmission resources corresponding to the PSCCH according to resources corresponding to the PSCCH and resource indication information, wherein the target transmission resources are transmission resources reserved by the PSCCH, the resource indication information is included in first-stage sidelink control information, the first-stage sidelink control information is carried on the PSCCH, and the resource indication information comprises at least one of subchannel indication information and resource block set indication information.

12. The method for the selecting sidelink resources as claimed in claim 11, wherein in a case where the resource indication information comprises the subchannel indication information, the subchannel indication information comprises: a first indication field, or both a first indication field and a second indication field;

the first indication field is used to determine at least one of the following: the number of subchannels occupied by the PSSCH transmission resources and the target transmission resources in respective first resource block sets, and a starting subchannel occupied by the target transmission resources in the first resource block set;
the second indication field is used to determine a difference value between an index value of a second target subchannel and an index value of a first target subchannel, the index value of the first target subchannel serves as a first index reference value for subchannels occupied by the PSSCH transmission resources and the target transmission resources in the first resource block set, and the index value of the second target subchannel serves as a second index reference value for subchannels occupied by the PSSCH transmission resources and the target transmission resources in a second resource block set;
a resource block set index corresponding to the first resource block set serves as a resource block set index reference value for all resource block sets occupied by the PSSCH transmission resources and the target transmission resources; and

the second resource block set is a resource block set other than the first resource block set occupied by the PSSCH transmission resources and the target transmission resources.

13. The method for the selecting sidelink resources as claimed in claim 11, wherein in a case where the resource indication information comprises the resource block set indication information, the resource block set indication information is used to determine at least one of the following: the number of resource block sets occupied by the PSSCH transmission resources, the number of resource block sets occupied by the target transmission resources, and an index value of a starting resource block set occupied by the target transmission resources.

14. The method for the selecting sidelink resources as claimed in claim 11, wherein the determining PSSCH transmission resources and target transmission resources corresponding to the PSCCH according to resources corresponding to the PSCCH and resource indication information comprises at least one of the following:

    determining the PSSCH transmission resources according to the resources corresponding to the PSCCH and the resource indication information; and
    determining the target transmission resources according to the resource indication information.

15. The method for the selecting sidelink resources as claimed in claim 14, wherein the determining the target transmission resources according to the resource indication information comprises at least one of the following:

    obtaining a starting resource block set occupied by the target transmission resources and the number of resource block sets occupied by the target transmission resources according to the resource block set indication information in the resource indication information;
    determining, according to a first indication field included in the subchannel indication information, a starting subchannel occupied by the target transmission resources in a first resource block set and the number of subchannels occupied in the first resource block set;
    determining subchannels occupied by the target transmission resources in the first resource block set according to the starting subchannel occupied by the target transmission resources in the first resource block set and the number of the subchannels occupied in the first resource block set;
    determining subchannels occupied by the target transmission resources in a second resource block set according to the subchannels occupied by the target transmission resources in the first resource block set; alternatively,
    determining subchannels occupied by the target transmission resources in the second resource block set according to the subchannels occupied by the target transmission resources in the first resource block set and a second indication field included in the subchannel indication information.

16. The method for the selecting sidelink resources as claimed in claim 15, wherein the determining subchannels occupied by the target transmission resources in the second resource block set according to the subchannels occupied by the target transmission resources in the first resource block set comprises at least one of the following:

    indexes of subchannels occupied in the second resource block set are the same as indexes of subchannels occupied in the first resource block set; and
    IRB indexes corresponding to the subchannels occupied in the second resource block set are the same as IRB indexes corresponding to the subchannels occupied in the first resource block set.

17. The method for the selecting sidelink resources as claimed in claim 15, wherein the determining subchannels occupied by the target transmission resources in the second resource block set according to the subchannels occupied by the target transmission resources in the first resource block set and the second indication field comprises: index values of the subchannels occupied by the target transmission resources in the second resource block set being sums of index values of the subchannels occupied by the target transmission resources in the first resource block set and a difference value indicated in the second indication field.

18. The method for the selecting sidelink resources as claimed in claim 14, wherein the determining the PSSCH transmission resources according to the resources corresponding to the PSCCH and the resource indication information comprises at least one of the following:

    determining resource block sets occupied by the PSSCH transmission resources according to the resources corresponding to the PSCCH and the resource block set indication information; and

determining subchannels occupied by the PSSCH transmission resources according to the resources corresponding to the PSCCH and the subchannel indication information.

19. The method for the selecting sidelink resources as claimed in claim 18, wherein the determining resource block sets occupied by the PSSCH transmission resources according to the resources corresponding to the PSCCH and the resource block set indication information comprises at least one of the following:

    determining a starting resource block set corresponding to the PSSCH transmission resources according to the resources corresponding to the PSCCH;
    determining the number of resource block sets occupied by the PSSCH transmission resources according to the resource block set indication information; and
    determining resource block sets occupied by the PSSCH transmission resources according to the starting resource block set corresponding to the PSSCH transmission resources and the number of the resource block sets occupied by the PSSCH transmission resources.

20. The method for the selecting sidelink resources as claimed in claim 18, wherein the determining subchannels occupied by the PSSCH transmission resources according to the resources corresponding to the PSCCH and the subchannel indication information comprises at least one of the following:

    determining a starting subchannel occupied by the PSSCH transmission resources in a first resource block set according to the resources corresponding to the PSCCH;
    determining the number of subchannels occupied by the PSSCH transmission resources in the first resource block set according to a first indication field in the subchannel indication information;
    determining subchannels occupied by the PSSCH transmission resources in the first resource block set according to the starting subchannel occupied by the PSSCH transmission resources in the first resource block set and the number of the subchannels occupied by the PSSCH transmission resources in the first resource block set;
    determining subchannels occupied by the PSSCH transmission resources in a second resource block set according to the subchannels occupied by the PSSCH transmission resources in the first resource block set; alternatively,
    determining subchannels occupied by the PSSCH transmission resources in the second resource block set according to the subchannels occupied by the PSSCH transmission resources in the first resource block set and a second indication field included in the subchannel indication information.

21. The method for the selecting sidelink resources as claimed in claim 20, wherein the determining subchannels occupied by the PSSCH transmission resources in the second resource block set according to the subchannels occupied by the PSSCH transmission resources in the first resource block set comprises at least one of the following:

    indexes of the subchannels occupied by the PSSCH transmission resources in the first resource block set are the same as indexes of the subchannels occupied by the PSSCH transmission resources in the second resource block set; and
    IRB indexes corresponding to the subchannels occupied by the PSSCH transmission resources in the first resource block set are the same as IRB indexes corresponding to the subchannels occupied by the PSSCH transmission resources in the second resource block set.

22. The method for the selecting sidelink resources as claimed in claim 20, wherein the determining subchannels occupied by the PSSCH transmission resources corresponding to the PSCCH in the second resource block set according to the subchannels occupied by the PSSCH transmission resources corresponding to the PSCCH in the first resource block set and the second indication field comprises:
    index values of the subchannels occupied by the PSSCH transmission resources in the second resource block set being sums of index values of the subchannels occupied by the PSSCH transmission resources in the first resource block set and a difference value indicated in the second indication field.

23. A control apparatus, applied to a first terminal, comprising:

    a first processing module, configured to perform resource selection and determine transmission resources for PSCCH and PSSCH transmissions; and
    a second processing module, configured to perform PSCCH and PSSCH transmission, wherein a PSCCH is used to carry first-stage sidelink control information, which at least comprises resource indication information, and the resource indication information comprises at least one of subchannel indication information and resource block set indication information.

24. A control apparatus, applied to a second terminal, comprising:

a third processing module, configured to receive a PSCCH sent by a first terminal; and
a fourth processing module, configured to determine PSSCH transmission resources and target transmission resources corresponding to the PSCCH according to resources corresponding to the PSCCH and resource indication information, wherein the target transmission resources are transmission resources reserved by the PSCCH, the resource indication information is included in first-stage sidelink control information, the first-stage sidelink control information is carried on the PSCCH, and the resource indication information at least comprises at least one of subchannel indication information and resource block set indication information.

25. A terminal device, comprising a processor, a memory, and a computer program stored on the memory and runnable on the processor, wherein the computer program, when executed by the processor, implements the steps of the method for selecting sidelink resources in an unlicensed spectrum, applied to a first terminal as claimed in any one of claims 1 to 10, or the steps of the method for selecting sidelink resources in an unlicensed spectrum, applied to a second terminal as claimed in any one of claims 11 to 22.

26. A computer-readable storage medium, having a computer program stored in the computer-readable storage medium, wherein the computer program, when executed by a processor, implements the steps of the method for selecting sidelink resources in an unlicensed spectrum, applied to a first terminal as claimed in any one of claims 1 to 10, or the steps of the method for selecting sidelink resources in an unlicensed spectrum, applied to a second terminal as claimed in any one of claims 11 to 22.

Perform resource selection to determine transmission resources for PSCCH and PSSCH transmissions
／ S101

Perform PSCCH and PSSCH transmission, where a PSCCH is used to carry first-stage sidelink control information, which at least includes resource indication information, and the resource indication information includes at least one of subchannel indication information and resource block set indication information
／ S102

Fig. 1

Resource block set (RB set) #2

Resource block set (RB set) #1

Resource block set (RB set) #0

Retransmission    Retransmission

⊠ PSCCH

▥ PSSCH

Initial transmission    Retransmission

Fig. 2

Fig. 3

Fig. 4

Fig. 5

Fig. 6

Obtain a starting resource block set occupied by target transmission resources and the number of resource block sets occupied by the target transmission resources according to resource block set information in resource indication information — S701

Determine, according to a first indication field included in subchannel indication information, a starting subchannel occupied by the target transmission resources in a first resource block set and the number of subchannels occupied in the first resource block set — S702

Determine subchannels occupied by the target transmission resources in the first resource block set according to the starting subchannel occupied by the target transmission resources in the first resource block set and the number of the subchannels occupied in the first resource block set — S703

S704 — Determine subchannels occupied by the target transmission resources in a second resource block set according to the subchannels occupied by the target transmission resources in the first resource block set

Determine subchannels occupied by the target transmission resources in the second resource block set according to the subchannels occupied by the target transmission resources in the first resource block set and a second indication field included in the subchannel indication information — S705

Fig. 7

Determine a starting resource block set corresponding to PSSCH transmission resources according to resources corresponding to a PSCCH — S801

Determine the number of resource block sets occupied by the PSSCH transmission resources according to resource block set indication information — S802

Determine resource block sets occupied by the PSSCH transmission resources according to the starting resource block set corresponding to the PSSCH transmission resources and the number of the resource block sets occupied by the PSSCH transmission resources — S803

Fig. 8

Determine a starting subchannel occupied by PSSCH transmission resources in a first resource block set according to resources corresponding to a PSCCH — S901

Determine the number of subchannels occupied by the PSSCH transmission resources in a first resource block set according to a first indication field in subchannel indication information — S902

Determine subchannels occupied by the PSSCH transmission resources in the first resource block set according to the starting subchannel occupied by the PSSCH transmission resources in the first resource block set and the number of the subchannels occupied by the PSSCH transmission resources in the first resource block set — S903

S904 — Determine subchannels occupied by the PSSCH transmission resources in a second resource block set according to the subchannels occupied by the PSSCH transmission resources in the first resource block set

Determine subchannels occupied by the PSSCH transmission resources in the second resource block set according to the subchannels occupied by the PSSCH transmission resources in the first resource block set and a second indication field included in the subchannel indication information — S905

Fig. 9

First processing module — 1001

Second processing module — 1002

Fig. 10

Third processing module — 1101

Fourth processing module — 1102

Fig. 11

## INTERNATIONAL SEARCH REPORT

| International application No. |
|---|
| **PCT/CN2024/075174** |

| **A.** | **CLASSIFICATION OF SUBJECT MATTER** |
|---|---|

H04W72/0453(2023.01)i

According to International Patent Classification (IPC) or to both national classification and IPC

| **B.** | **FIELDS SEARCHED** |
|---|---|

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

3GPP, CNKI, CNTXT, ENTXTC, VEN: 侧链, 非授权, 共享, 候选, 目标, 旁路, 预约, 预留, 直通链路, 指示, 资源, indication, PSCCH, PSSCH, sidelink, SL-U

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 114586390 A (BEIJING XIAOMI MOBILE SOFTWARE CO., LTD.) 03 June 2022 (2022-06-03) description, paragraphs [0120]-[0287], and figures 1-16 | 1-26 |
| A | CN 114765511 A (SPREADTRUM COMMUNICATIONS (SHANGHAI) CO., LTD.) 19 July 2022 (2022-07-19) entire document | 1-26 |
| A | CN 115589596 A (QUECTEL WIRELESS SOLUTIONS CO., LTD.) 10 January 2023 (2023-01-10) entire document | 1-26 |
| A | CN 115699930 A (OPPO GUANGDONG MOBILE TELECOMMUNICATIONS CORP., LTD.) 03 February 2023 (2023-02-03) entire document | 1-26 |
| A | WO 2023287224 A1 (LG ELECTRONICS INC.) 19 January 2023 (2023-01-19) entire document | 1-26 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 May 2024** | **10 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/075174** |

| C. | DOCUMENTS CONSIDERED TO BE RELEVANT | |
| --- | --- | --- |
| Category* | Citation of document, with indication, where appropriate, of the relevant passages | Relevant to claim No. |
| A | NOKIA et al. "On Physical Channel Design Framework for SL-U" *3GPP TSG RAN WG1 #109-e, R1-2203123*, 20 May 2022 (2022-05-20), entire document | 1-26 |

Form PCT/ISA/210 (second sheet) (July 2022)

33

## INTERNATIONAL SEARCH REPORT
### Information on patent family members

| International application No. |
| --- |
| **PCT/CN2024/075174** |

| Patent document cited in search report | | | Publication date (day/month/year) | Patent family member(s) | | | Publication date (day/month/year) |
| --- | --- | --- | --- | --- | --- | --- | --- |
| CN | 114586390 | A | 03 June 2022 | WO | 2022040939 | A1 | 03 March 2022 |
| | | | | CN | 116347601 | A | 27 June 2023 |
| | | | | EP | 4207895 | A1 | 05 July 2023 |
| | | | | US | 2024090009 | A1 | 14 March 2024 |
| CN | 114765511 | A | 19 July 2022 | WO | 2022152328 | A1 | 21 July 2022 |
| | | | | US | 2024064781 | A1 | 22 February 2024 |
| CN | 115589596 | A | 10 January 2023 | US | 2024107560 | A1 | 28 March 2024 |
| | | | | US | 2024107561 | A1 | 28 March 2024 |
| CN | 115699930 | A | 03 February 2023 | WO | 2022040939 | A1 | 03 March 2022 |
| | | | | CN | 116347601 | A | 27 June 2023 |
| | | | | EP | 4207895 | A1 | 05 July 2023 |
| | | | | US | 2024090009 | A1 | 14 March 2024 |
| WO | 2023287224 | A1 | 19 January 2023 | KR | 20240023107 | A | 20 February 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310131416